(19) Europäisches Patentamt

European Patent Office

Office européen des brevets

(11) Veröffentlichungsnummer: **0 180 806**
**B1**

(12) **EUROPÄISCHE PATENTSCHRIFT**

(45) Veröffentlichungstag der Patentschrift:
26.07.89

(21) Anmeldenummer: 85112874.4

(22) Anmeldetag: 11.10.85

(51) Int. Cl.⁴: **A 01 N 65/00**

(54) Organisch-chemische Verbindung.

(30) Priorität: 23.10.84 DE 3438763

(43) Veröffentlichungstag der Anmeldung:
14.05.86 Patentblatt 86/20

(45) Bekanntmachung des Hinweises auf die Patenterteilung:
26.07.89 Patentblatt 89/30

(84) Benannte Vertragsstaaten:
BE CH DE FR GB IT LI NL

(56) Entgegenhaltungen:
BIOLOGICAL ABSTRACTS, Band 65, Nr. 11, 1. Juni 1978,
Zusammenfassung Nr. 63326, Philadelphia, US; S.D.
DESHMUKH et al.: "Studies on the insecticidal
properties of indigenous plant products", & INDIAN J.
ENTOMOL. 37(1): 11-18, 1975
JOURNAL OF ECONOMIC ENTOMOLOGY, Band 76, Nr.
3, Juni 1983, Seiten 573-576, College Park, Maryland,
US; V. MARIAPPAN et al.: "Effect of custard-apple oil
and neem oil on survival of Nephotettix virescens
(Homoptera: cicadellidae) and on rice tungro virus
transmission"

Die Akte enthält technische Angaben, die nach dem
Eingang der Anmeldung eingereicht wurden und die
nicht in dieser Patentschrift enthalten sind.

(73) Patentinhaber: BAYER AG,
D-5090 Leverkusen 1 Bayerwerk (DE)

(72) Erfinder: Moeschler, Heinrich Ferdinand, Dr.,
Hahnenweg 8, D-5000 Köln 80 (DE)
Erfinder: Pflüger, Wolfgang, Dr., Am Treppchen 7,
D-5653 Leichlingen 1 (DE)
Erfinder: Wendisch, Detlef, Dr.,
August-Kierspel-Strasse 145,
D-5060 Bergisch-Gladbach 2 (DE)

## Beschreibung

Die vorliegende Erfindung betrifft eine neue organisch-chemische Verbindung aus der tropischen Pflanze Schuppenannone Annona squamosa (engl. «Custard apple»), Familie Annonaceae, ein Verfahren zu ihrer Isolierung, sowie ihre Verwendung als Insektizid. Die neue Verbindung wird im folgenden als Annonin bezeichnet.

Es ist bereits bekannt geworden, dass Extrakte aus Annona-Arten gewisse insektizide Eigenschaften aufweisen. Die Wirksamkeit dieser Extrakte ist für praktische Zwecke jedoch nicht immer zufriedenstellend (vgl. Journal of Economic Entomology, Vol. 76, No. 3, Seite 573–576 (1983) und Biol. Abstr. 65, (1978), Nr. 63 326).

Es wurde die neue organisch-chemische Verbindung (Bezeichnung: Annonin) gefunden, welche wie folgt charakterisiert werden kann:

1. Aussehen:
farbloser amorpher wachsartiger Feststoff.

2. Löslichkeit:
die wachsartige Substanz ist unlöslich oder sehr schwer löslich in Petrolether und Wasser, gut löslich in Ether, $CHCl_3$, $CH_2Cl_2$, Methanol, Essigester. Sie zeigt eine positive Reaktion mit Vanillin/Schwefelsäure und Dragendorffs Reagenz, obwohl sie keinen Stickstoff enthält.

3. Molekulargewicht (MG): 622
das MG wurde ermittelt durch:
FD  Massenspektrum: m/e 623 ($M^+ + H$)
DCI Massenspektrum: m/e 623 ($M^+ + H$)
(mit Isobutan als Reaktandgas)

EI Massenspektrum: m/e 604 als höchstes Fragmention mit einer über die Feinmasse bestimmten Elementarzusammensetzung: $C_{37}H_{64}O_6$ (= $MG-H_2O$).

4. Elementaranalyse:
C=70,5 %; H=10,7 %; O=18,1 % gefunden
C=71,34%; H=10,68%; O=17,98% berechnet
Bruttoformel (MG = 622): $C_{37}H_{66}O_7$.

5. UV-Spektrum:
$\lambda_{max}^{Acetonitril}$ = 209 nm ($\varepsilon_{max}$ 9.500)

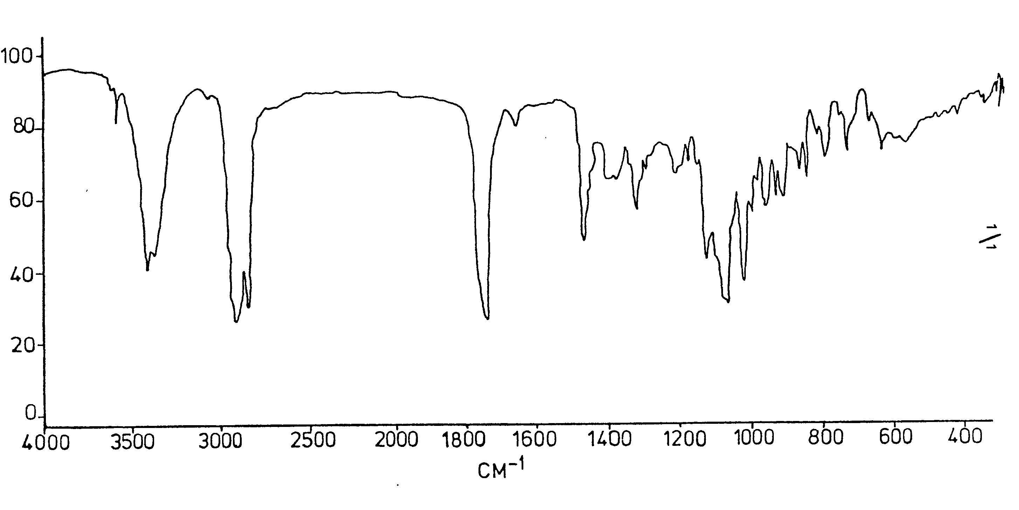

6. IR-Spektrum (KBr) ν max:
3420; 3380; 2920; 2850; 1745; 1655; 1465; 1320; 1120; 1070; 1020; 960; 930; 910; 860; 840; 740; 630 $cm^{-1}$ (vgl. Fig. 1)

7. EI-Massenspektrum: m/e (Intensität)
604 (< 1) = $C_{37}H_{64}O_6$; 586 (< 1); 568 (< 1); 519 (1,3); 501 (2,8); 483 (2,7); 465 (1,5); 417 (6,9); 399 (16,7) = $C_{26}H_{39}O_3$; 347 (62,7) = $C_{22}H_{35}O_3$; 329 (14,7); 319 (15); 295 (100) = $C_{18}H_{31}O_3$ (Basepeak); 267 (19); 239 (19,3) = $C_{15}H_{27}O_2$; 203 (8); 195 (14); 169 (18); 135 (22); 121 (32,7); 109 (39,3); 97 (49,3); 95 (66); 83 (34,3); 81 (60); 71 (44); 69 (38,7); 67 (46); 57 (27,3); 55 (56); 43 (35,3); 41 (35).

8. $^{13}C$-NMR-Spektrum: ($CDCl_3$) δ (ppm):
173.897 (O–CO–; α,β-unges.), 148.879 (olef. CH), 134.329 (olef. C), 83.379 (CH, α zu O), 82.869 (CH, α zu O), 82.546 (CH, α zu O), 82.197 (CH, α zu O), 77.338 (CH, α zu O und $CH_3$), 74.127 (CH, α zu O), 71.657 (CH, α zu O), 71.320 (CH, α zu O), 37.413 ($CH_2$), 37.207 ($CH_2$), 33.108 ($CH_2$), 32.397 ($CH_2$), 31.789 ($CH_2$), 29.696 ($CH_2$), 29.541 ($3 \times CH_2$), 29.518 ($CH_2$), 29.438 ($CH_2$), 29.321 ($CH_2$), 29.233 ($CH_2$), 29.106 ($CH_2$), 28.910 ($CH_2$), 28.891 ($CH_2$), 28.400 ($CH_2$), 27.328 ($CH_2$), 25.597 ($CH_2$, allyl.), 25.573 ($CH_2$), 25.097 ($CH_2$), 24.723 ($CH_2$), 22.552 ($CH_2$, α zu $CH_3$), 21.981 ($CH_2$), 19.145 ($CH_3$, α zu CH), 14.007 ($CH_3$, α zu $CH_2$).

9. $^1H$-NMR-Spektrum: ($CDCl_3$) δ (ppm):
6.988 (olef. H, pseudo-q), 4.995 (CH, α zu O und $CH_3$; pseudo-qq), 3.97–3.77 (5 CH, α zu O), 3.600 (CH, α zu O, m), 3.400 (CH, α zu O, pseudo-q), 2.263 (allyl. $CH_2$, pseudo-tt), 2.05–1.18 (23 $CH_2$, komplex), 1.405 ($CH_3$, α zu O und CH, d, J = 6,5 Hz), 0,878 ($CH_3$, α zu $CH_2$, t, J = 6,6 Hz)
3 Hydroxyl-H um ca. 3, breit.

10. Drehwert (C = 0,15 in $CH_2Cl_2$):

| nm | 589 | 578 | 546 | 436 | 365 | 302 |
|---|---|---|---|---|---|---|
| $[\alpha]_{25}$ | +21,5 | +21,6 | +29,8 | +51,3 | +89,5 | +182,6 |

11. Circulardichroismus
239 nm ($\triangle \varepsilon$ −0,55); 210 nm ($\triangle \varepsilon$ +5,70)
(in Methanol)

12. EI-Massenspektrum des Trioxoannonins
m/e (Intensität)
(hergestellt aus Annonin durch Oxidation mit Jones-Reagenz)
616, Molion (10); 598 (5); 488 (2); 433 (25); 415 (98); 397 (12); 389 (3); 387 (3); 371 (3); 363 (1); 345 (2); 337 (3); 323 (32); 305 (58); 293 (24); 287 (17); 279 (12); 265 (8); 261 (8); 237 (4); 195 (16); 183 (17); 177 (19); 175 (10); 167 (12); 155 (20); 153 (12); 151 (14); 149 (12); 147 (12); 145 (10); 143 (16); 125 (16); 123 (17); 121 (18); 113 (40); 111 (22); 109 (23); 107 (26); 99 (20); 97 (34); 95 (45); 85 (25); 83 (32); 81 (41); 71 (56); 69 (46); 67 (38); 57 (46); 55 (33); 43 (96); 41 (52); 32 (> 100); 28 (> 100); 18 (> 100); 17 (> 100).

Es wurde gefunden, dass das neue Annonin biologische Eigenschaften aufweist, die seine Verwendung als Schädlingsbekämpfungsmittel, vorzugsweise als Insektizid, ermöglichen.

Weiterhin wurde gefunden, dass man das neue Annonin dadurch erhält, dass man aus zerkleinerten Pflanzenteilen, vorzugsweise der Samen, von Annona squamosa

(1) die in Petrolether löslichen Inhaltsstoffe extrahiert und den Petrolether-Extrakt verwirft und anschliessend

(2) das von den in Petrolether löslichen Stoffen weitgehend befreite Pflanzenmaterial mit in Wasser mischbaren Alkoholen gegebenenfalls in Gegenwart von Wasser, extrahiert, den Rückstand verwirft, den Extrakt einengt und den auf diese Weise erhaltenen konzentrierten Extrakt mit einem aliphatischen Halogenkohlenwasserstoff, einem aliphatischen Ether und/oder einem Ester extrahiert und den Rückstand verwirft, und

(3) das gemäss (2) erhaltene rohe Annonin durch Verdampfen des Lösungsmittels isoliert und gegebenenfalls

(4) nach üblichen Methoden reinigt.

Für die Verwendung als Schädlingsbekämpfungsmittel ist es in vielen Fällen nicht erforderlich, das gemäss (3) erhaltene rohe Annonin weiter zu reinigen.

Für das erfindungsgemässe Verfahren zur Isolierung von Annonin können frische oder getrocknete, vorzugsweise frische, Samen aus Annona squamosa-Früchten eingesetzt werden, wobei die Samen oder das zerkleinerte Samenmaterial auch so aufbereitet vorliegen kann, dass ein Verderben verhindert wird (z.B. durch Tiefkühlen, Sterilisieren usw.).

Bei der Durchführung des erfindungsgemässen Verfahrens werden die Samen mit üblichen Methoden, beispielsweise mechanisch durch Zertrümmern, Zerhacken oder Zermahlen zerkleinert, und die zerkleinerte Samenmasse zunächst mit Kohlenwasserstoffgemischen wie Petrolether oder mit definierten Kohlenwasserstoffen wie Pentan oder Hexan, vorzugsweise Petrolether (30 bis 60 °C), durch Extraktion nach üblichen Methoden erschöpfend entfettet. Dieses Verfahren kann bei Raumtemperatur oder erhöhter Temperatur durchgeführt werden, die durch den Siedepunkt des Lösungsmittels bestimmt wird, bevorzugt zwischen Raumtemperatur und 60 °C. Die Extraktion kann diskontinuierlich oder kontinuierlich, z.B. in einem Rührkessel, in einem Soxhlet oder in einem Perkolator erfolgen.

Dieser Extrakt enthält bevorzugt die stark lipophilen, im Samen enthaltenen Verbindungen und wird verworfen.

Die so behandelte Samenmasse wird in einem nächsten Schritt mehrfach mit einem aliphatischen Alkohol mit 1 bis 3 Kohlenstoffatomen oder mit Alkohol-Wassergemischen wie Methanol-Wasser, Ethanol-Wasser, Propanol-Wasser in unterschiedlichen Verhältnissen extrahiert; bevorzugt werden Gemische wie Methanol-Wasser (90:10 bis 10:90) oder Ethanol-Wasser (80:20 bis 20:80) sowie Methanol und/oder Ethanol ohne die Zugabe von Wasser.

Die Extraktion kann sowohl bei Raumtemperatur als auch bei erhöhter Temperatur (bevorzugt 15 bis 70 °C, insbesondere 30 bis 60 °C) zweckmässigerweise unter Rühren durchgeführt werden. Ausser einer diskontinuierlichen ist auch eine kontinuierliche Extraktion, z.B. im Soxhlet oder im Perkolator, möglich.

Der auf diese Weise gewonnene Extrakt wird im Vakuum bis zur Entfernung des Hauptteils an Alkohol eingeengt und anschliessend mit in Wasser schwer mischbaren polaren organischen Lösungsmitteln, wie einem Chlorkohlenwasserstoff z.B. $CH_2Cl_2$ oder $CHCl_3$ oder einem aliphatischen Ether wie Diethylether oder einem Ester aus einem niederen aliphatischen Alkohol und einer niederen aliphatischen Säure, wie Ethylacetat oder einem Gemisch dieser Lösungsmittel, aufgenommen. Nach dem Verdampfen (vorzugsweise unter vermindertem Druck) des Lösungsmittels erhält man ein Konzentrat, das das erfindungsgemässe Annonin als Hauptkomponente enthält.

Eine gegebenenfalls gewünschte weitere Reinigung kann nach üblichen Methoden durch Chromatographie, beispielsweise in Form der Säulenchromatographie oder der präparativen Dünnschichtchromatographie durchgeführt werden. Als Trägermaterial eignen sich hierfür z.B. Aluminiumoxid, Kieselgel, Magnesiumsilikat, Aktivkohle, Cellulose oder Dextrangele, Derivate von Polyamiden wie acetyliertes Polyamid. Als Laufmittel können sowohl bei der präparativen Dünnschichtchromatographie als auch bei der Säulenchromatographie diejenigen Lösungsmittel oder Lösungsmittelgemische verwendet werden, in welchen die erfindungsgemässe Substanz löslich ist. Geeignet sind beispielsweise Ether wie Diethylether, halogenierte aliphatische Kohlenwasserstoffe, wie Chloroform und Methylenchlorid, Ester wie Essigsäureethylester, niedere aliphatische Alkohole wie Methanol, Ethanol, n-Propanol und iso-Propanol oder Gemische dieser Lösungsmittel, wobei gegebenenfalls auch geringe Anteile an n-Hexan, n-Pentan oder Petrolether zugefügt werden können.

Vorzugsweise werden Gemische aus Chloroform oder Methylenchlorid mit Methanol verwendet. Setzt man beispielsweise als Trägermaterial Kieselgel ein, lässt sich die weitere Reinigung des Konzentrates besonders günstig mit einem Stufengradienten aus $CHCl_3$ und Methanol durchführen. Man verwendet in diesem Fall zur Chromatographie vorzugsweise ein mit bis zu 10% Wasser desaktiviertes Kieselgel, vorzugsweise ein mit 5 bis 10% Wasser desaktiviertes Kieselgel, wobei auch nicht derart desaktiviertes Kieselgel verwendet werden kann.

Zweckmässigerweise wird die Elution mit $CHCl_3$ begonnen, dem stufenweise bis zu 15% Methanol zugesetzt wird. Der erfindungsgemässe Wirkstoff lässt sich bevorzugt mit einem 2,5 bis 5% Methanol enthaltenden Chloroform eluieren.

Die weitere Reinigung des erfindungsgemässen Wirkstoffes kann zweckmässigerweise durch präparative HPLC auf einer RP-18 Säule mit unterschiedlichen Laufmitteln erfolgen. Geeignet sind Gemische aus Methanol/Acetonitril und Wasser mit Anteilen an Methyltertiärbutylether und Propionitril.

Alle in der Beschreibung (einschliesslich den Beispielen) angegebenen %-Angaben beziehen sich, wo nichts anderes angegeben wird, auf Gewichtsprozente. Alle Verhältnisangaben (z.B. bei den Lösungsmittelgemischen) beziehen sich auf Volumenteile (Vol/Vol), wenn nichts anderes angegeben wird.

Die Wirkstoffe eignen sich bei guter Pflanzenverträglichkeit zur Bekämpfung von tierischen Schädlingen, insbesondere Insekten, die in der Landwirtschaft, in Forsten, im Vorrats- und Materialschutz sowie auf dem Hygienesektor vorkommen. Sie sind gegen normal sensible und resistente Arten sowie gegen alle oder einzelne Entwicklungsstadien wirksam. Je nach Insektenart und Wirkstoffkonzentration zeigt sich eine akute und/oder entwicklungsverzögernde und entwicklungshemmende Wirkung. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spec.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blattella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.

Aus der Ordnung der Anoplura z.B. Phylloxera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadrata, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelis bilobatus, Nephotettix cincticeps, Lecanium corni, Saissetia oleae, Laodelphax striatellus, Nilaparvata lugens, Aonidiella aurantii, Aspidiotus hederae, Pseudococcus spp. Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp., Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Tineola bisselliella, Tinea pellionella, Hofmannophila pseudospretella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hyppobosca spp., Stomoxys spp., Oestrus spp., Hypoderma spp., Tabanus spp., Tannia spp., Bibio hortulanus, Oscinella frit., Phorbia spp., Pegomyia hyoscyami, Ceratitis capitata, Dacus oleae, Tipula paludosa.

Aus der Ordnung der Siphonaptera z.B. Xenopsylla cheopis, Ceratophyllus spp.

Aus der Ordnung der Arachnida z.B. Scorpio maurus, Latrodectus mactans.

Aus der Ordnung der Acarina z.B. Acarus siro, Argas spp., Ornithodoros spp., Dermanyssus gallinae, Eriophyes ribis, Phyllocoptruta oleivora, Boophilus spp., Rhipicephalus spp., Amblyomma spp., Hyalomma spp., Ixodes spp., Psoroptes spp., Chorioptes spp., Sarcoptes spp., Tarsonemus spp., Bryobia praetiosa, Panonychus spp., Tetranychus spp.

Zu den pflanzenparasitären Nematoden gehören Pratylenchus spp., Radopholus similis, Ditylenchus dipsaci, Tylenchulus semipenetrans, Heterodera spp., Meloidogyne spp., Aphelenchoides spp., Longidorus spp., Xiphinema spp., Trichodorus spp.

Der Wirkstoff kann in die üblichen Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen und in Hüllmassen für Saatgut, ferner in Formulierungen mit Brennsätzen, wie Räucherpatronen, -dosen, -spiralen u.ä., sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser; mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgas, wie Halogenkohlenwasserstoffe sowie Butan, Propan, Stickstoff und Kohlendioxid; als feste Trägerstoffe kommen in Frage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnussschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykol-Ether, Alkylsulfonate, Alkylsulfate, Arylsulfonate sowie Eiweisshydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90%.

Der erfindungsgemässe Wirkstoff kann in seinen handelsüblichen Formulierungen sowie in den aus diesen Formulierungen bereiteten Anwendungsformen in Mischung mit anderen Wirkstoffen, wie Insektiziden, Lockstoffen, Sterilantien, Akariziden, Nematiziden, Fungiziden, wachstumsregulierenden Stoffen oder Herbiziden vorliegen. Zu den Insektiziden zählen beispielsweise Phosphorsäureester, Carbamate, Carbonsäureester, chlorierte Kohlenwasserstoffe, Phenylharnstoffe, durch Mikroorganismen hergestellte Stoffe u.a.

Der erfindungsgemässe Wirkstoff kann ferner in seinen handelsüblichen Formulierungen sowie in den aus diesen Formulierungen bereiteten Anwendungsformen in Mischung mit Synergisten vorliegen. Synergisten sind Verbindungen, durch die die Wirkung der Wirkstoffe gesteigert wird, ohne dass der zugesetzte Synergist selbst aktiv wirksam sein muss.

Der Wirkstoffgehalt der aus den handelsüblichen Formulierungen bereiteten Anwendungsformen kann in weiten Bereichen variieren. Die Wirkstoffkonzentration der Anwendungsformen kann von 0,0000001 bis zu 95 Gew.-% Wirkstoff, vorzugsweise zwischen 0,0001 und 1 Gew.-% liegen. Die Anwendung geschieht in einer den Anwendungsformen angepassten üblichen Weise.

Bei der Anwendung gegen Hygiene- und Vorratsschädlinge zeichnet sich der Wirkstoff durch eine hervorragende Residualwirkung auf Holz und Ton sowie durch eine gute Alkalistabilität auf gekälkten Unterlagen aus.

Die Herstellung des erfindungsgemässen Wirkstoffes soll anhand der folgenden Beispiele erläutert werden:

Beispiel 1
Extraktion der Samen von Annona squamosa (500 g-Massstab)

500 g frischer Samen (tiefgefroren) von Annona squamosa (Herkunft: Thailand) werden im Mixgerät mit Messerwerk ohne Zugabe von Flüssigkeit zerkleinert.

Die zerkleinerten Samen werden 7 × mit je 800 ml Petrolether oder Pentan bei 30 °C je 30 min ausgerührt. Die Extrakte werden verworfen.

Die so entfettete abfiltrierte Samenmasse wird darauf 5 × mit je 500 ml Ethanol/$H_2O$ (80:20) bei 60 °C ausgerührt und die festen Teile abfiltriert.

Nach Abziehen des Ethanols erhält man einen öligen Rückstand, der teilweise in Wasser suspendiert bzw. emulgiert ist (abhängig vom Restgehalt an Ethanol). Man extrahiert diesen Rückstand erschöpfend (5 × mit je 500 ml) mit Ether. Die Ether-Phase wird abgetrennt. Nach Einengen der Ether-Phase erhält man 1,8 g wachsartige Masse, in der die insektizide Hauptkomponente Annonin angereichert ist. «Ether» bedeutet in diesem Beispiel Diethylether.

Beispiel 2
Extraktion der Samen von Annona squamosa (22 kg Massstab)

22 kg frischer Samen von Annona squamosa (Herkunft: Thailand) werden im Mixgerät mit Messerwerk zerkleinert.

Man rührt bei 30 °C im Rührkessel 6 × mit insgesamt 191 l Petrolether aus und verwirft die Petrolether-Lösung.

Die abfiltrierte Samenmasse wird im Vakuum getrocknet und erneut mit dem Mixgerät zerkleinert (10,45 kg). Es wird insgesamt 5 × mit je 36 l Ethanol/$H_2O$ (80:20) im Rührkessel bei 60 °C extrahiert und die Feststoffe abfiltriert.

Die 180 l Filtrat werden aufkonzentriert (Abziehen des Ethanols). Man erhält 18 l Öl, das nach Trocknung im Hochvakuum eine Ausbeute von 0,91 kg Rohprodukt ergibt.

Beispiel 3
Säulenchromatographie auf Kieselgel (Anreicherung)
9 g des in Beispiel 1 gewonnenen Extraktes werden in 25 ml Chloroform gelöst und auf eine mit 10% $H_2O$ desaktivierte Kieselgelsäule (70 mm $\emptyset$ × 700 mm lang) aufgetragen.
Die Elution erfolgt im Stufengradienten ($\overline{v}$ = 3 ml/min) mit $CCl_3$/MeOH:

| Elutatmenge | CHCl₃/MeOH (Vol/Vol) | Fraktion |
|---|---|---|
| 2,25 l | 97,5/2,5 | 1–50 |
| 1,35 l | 95 /5 | 51–80 |

Der erfindungsgemässe Wirkstoff (Annonin) wird in den Fraktionen 37 bis 60 eluiert.
Nach Abziehen des Lösungsmittels erhält man 3,1 g einer wachsartigen Masse.

Beispiel 4
Isolierung von Annonin (Feinreinigung)
200 mg des in Beispiel 3 gewonnenen Produktes werden über eine präp. HPLC-Säule (570 mm × 30 mm $\emptyset$) gefüllt mit LiChroprep (RP 18, Merck®) getrennt.
Laufmittel (Vol/Vol): Methanol (700), $H_2O$ (300), Methyl-tert.-butylether (150), Propionitril (2,5) Detektor: UV-Durchflusszelle, 220 nm.
Der Fluss beträgt 15 ml/min. Die Annonin enthaltenden Fraktionen werden vereinigt und im Vakuum vom Lösungsmittel befreit. Man erhält 85 mg Annonin.
Die biologische Wirksamkeit der erfindungsgemässen Verbindung soll anhand der folgenden Beispiele erläutert werden:

Beispiel A
Phaedon-Test
Lösungsmittel: 3 Gewichtsteile Aceton
Emulgator: 1 Gewichtsteil Alkylarylpolyglykolether
Zur Herstellung einer zweckmässigen Wirkstoffzubereitung vermischt man 1 Gewichtsteil Wirkstoff mit der angegebenen Menge Lösungsmittel und der angegebenen Menge Emulgator und verdünnt das Konzentrat mit Wasser auf die gewünschten Konzentrationen.
Kohlpflanzen (Brassica oleracea) werden mit der Wirkstoffzubereitung der gewünschten Konzentration behandelt. Ein Blatt der behandelten Pflanze wird in eine Plastikdose gelegt und mit Larven des Meerrettichkäfers (Phaedon cochleariae) besetzt. Nach 2 und 4 Tagen wird jeweils ein weiteres Blatt von derselben Pflanze für die Nachfütterung verwendet.
Nach der gewünschten Zeit wird die Abtötung in % bestimmt. Dabei bedeutet 100%, dass alle Tiere abgetötet wurden; 0% bedeutet, dass keine Tiere abgetötet wurden.
Bei diesem Test wurden Phaedon-Larven beispielsweise bei einer Konzentration von 0,004% nach 14 Tagen zu 100% abgetötet.

Beispiel B
Plutella-Test
Lösungsmittel: 3 Gewichtsteile Aceton
Emulgator: 1 Gewichtsteile Alkylarylpolyglykolether
Zur Herstellung einer zweckmässigen Wirkstoffzubereitung vermischt man 1 Gewichtsteil Wirkstoff mit der angegebenen Menge Emulgator und verdünnt das Konzentrat mit Wasser auf die gewünschten Konzentrationen.
Kohlpflanzen (Brassica oleracea) werden mit der Wirkstoffzubereitung der gewünschten Konzentration behandelt. Ein Blatt der behandelten Pflanze wird in eine Plastikdose gelegt und mit Raupen der Kohlschabe (Plutella maculipennis) besetzt. Nach 2 und 4 Tagen wird jeweils ein weiteres Blatt von derselben Pflanze für die Nachfütterung verwendet.
Nach der gewünschten Zeit wird die Abtötung in % bestimmt. Dabei bedeutet 100%, dass alle Tiere abgetötet wurden; 0% bedeutet, dass keine Tiere abgetötet wurden.
Bei diesem Test wurden Plutella-Larven beispielsweise bei einer Konzentration von 0,004% nach 14 Tagen zu 100% abgetötet.

Beispiel C
Myzus-Test
Lösungsmittel: 3 Gewichtsteile Aceton
Emulgator: 1 Gewichtsteil Alkylarylpolyglykolether
Zur Herstellung einer zweckmässigen Wirkstoffzubereitung vermischt man 1 Gewichtsteil Wirkstoff mit der angegebenen Menge Lösungsmittel und Emulgator und verdünnt mit Wasser auf die gewünschte Konzentration.
Dicke Bohnen (Vicia faba) werden mit Blattläusen (Myzus persicae) besetzt und mit der Wirkstoffzubereitung der gewünschten Konzentration behandelt. Nach 2, 6 und 10 Tagen wird die Entwicklung der Blattlauspopulation in % Wirkung boniert. Dabei bedeutet 100%, dass alle Tiere abgetötet wurden, 0% bedeutet, dass kein Einfluss des Präparates festzustellen war.
Bei diesem Test wurde beispielsweise bei einer Konzentration von 0,004% nach 10 Tagen noch eine Wirkung von 98% festgestellt.

Aufnahmebedingungen der Spektren:
Alle [13]-C-Experimente ein- und zweidimensionaler Art wurden bei 50,3 MHz auf dem Spektrometer XL-200® (Varian, Palo Alto/USA) durchgeführt. Eindimensionale Protonenmessungen erfolgten mit und ohne gepulste Homoentkopplungen bei 360 MHz auf dem Spektrometer WH-360® (Bruker, Rheinstetten/BRD) mit dem Rechner Aspect 2000. $^1$H-Cosy-Experimente wurden auf dem Spektrometer XL-200® bei 200 MHz durchgeführt. Lösungsmittel war in allen Fällen CDCl$_3$, das auch als $^2$-H-Locksubstanz verwendet wurde. Tetramethylsilan wurde in allen Fällen als Standard benutzt.

Das EI-Massenspektrum wurde mit dem Spektrometer Finnigan-MAT CH7® mit SS 220 Datensystem, bei Totalionenstrom geregelter Verdampfung, ermittelt.

Erläuterung verwendeter Abkürzungen und Warenzeichen:

DC = Dünnschichtchromatographie
HPLC = Hochdruckflüssigchromatographie
FD = Field Desorption
DCI = Direct Chemical Ionization
EI = Electron Ionization

RP 18: Kieselgel silanisiert mit C-18 Kohlenwasserstoffkette, für Umkehrphasen (Reversed Phase)-Chromatographie

LiChroprep (RP 18): Kieselgel silanisiert mit C-18 Kohlenwasserstoffkette für Umkehrphasen-Chromatographie LiChroprep = Warenzeichen der E. Merck, Darmstadt, Bundesrepublik Deutschland

Erläuterung der Fig. 1

Die Figur 1 gibt das IR-Spektrum von Annonin wieder. Hierbei bedeuten die Ordinate die Transmission in % und die Abszisse die Wellenzahl in cm$^{-1}$.

## Patentansprüche

1. Organisch-chemische Verbindung mit folgenden Eigenschaften:

1. Aussehen:
Farbloser amorpher wachsartiger Feststoff.

2. Löslichkeit:
Die wachsartige Substanz ist unlöslich oder sehr schwer löslich in Petrolether und Wasser, gut löslich in Ether, CHCl$_3$, CH$_2$Cl$_2$, Methanol, Essigester. Sie zeigt eine positive Reaktion mit Vanillin/ Schwefelsäure und Dragendorffs Reagenz, obwohl sie keinen Stickstoff enthält.

3. Molekulargewicht (MG): 622

4. Elementaranalyse:
C=70,5 %; H=10,7 %; O=18,1 % gefunden
C=71,34%; H=10,68%; O=17,98% berechnet
Bruttoformel (MG = 622): C$_{37}$H$_{66}$O$_7$.

5. UV-Spektrum:
$\lambda_{max}^{Acetonitril}$ = 209 nm ($\varepsilon_{max}$ 9.500)

6. IR-Spektrum (KBr)
$\nu_{max}$: 3420; 3380; 2920; 2850; 1745; 1655; 1465; 1320; 1120; 1070; 1020; 960; 930; 910; 860; 840; 740; 630 cm$^{-1}$ und Fig. 1.

7. EI-Massenspektrum: m/e (Intensität)
604 (< 1) = C$_{37}$H$_{64}$O$_6$; 586 (< 1); 568 (< 1); 519 (1,3); 501 (2,8); 483 (2,7); 465 (1,5); 417 (6,9); 399 (16,7) = C$_{26}$H$_{39}$O$_3$; 347 (62,7) = C$_{22}$H$_{35}$O$_3$; 329 (14,7); 319 (15); 295 (100) = C$_{18}$H$_{31}$O$_3$ (Basepeak); 267 (19); 239 (19,3) = C$_{15}$H$_{27}$O$_2$; 203 (8); 195 (14); 169 (18); 135 (22); 121 (32,7); 109 (39,3); 97 (49,3); 95 (66); 83 (34,3); 81 (60); 71 (44); 69 (38,7); 67 (46); 57 (27,3); 55 (56); 43 (35,3); 41 (35).

8. $^{13}$C-NMR-Spektrum: (CDCl$_3$) δ (ppm):
173.897 (O–CO–; α, β-unges.), 148.879 (olef. CH), 134.329 (olef. C), 83.379 (CH, α zu O), 82.869 (CH, α zu O), 82.546 (CH, α zu O), 82.197 (CH, α zu O), 77.338 (CH, α zu O und CH$_3$), 74.127 (CH, α zu O), 71.657 (CH, α zu O), 71.320 (CH, α zu O), 37.413 (CH$_2$), 37.207 (CH$_2$), 33.108 (CH$_2$), 32.397 (CH$_2$), 31.789 (CH$_2$), 29.696 (CH$_2$), 29.541 (3×CH$_2$), 29.518 (CH$_2$), 29.438 (CH$_2$), 29.321 (CH$_2$), 29.233 (CH$_2$), 29.106 (CH$_2$), 28.910 (CH$_2$), 28.891 (CH$_2$), 28.400 (CH$_2$), 27.328 (CH$_2$), 25.597 (CH$_2$, allyl.), 25.573 (CH$_2$), 25.097 (CH$_2$), 24.723 (CH$_2$), 22.552 (CH$_2$, α zu CH$_3$), 21.981 (CH$_2$), 19.145 (CH$_3$, α zu CH), 14.007 (CH$_3$, α zu CH$_2$).

9. $^1$H-NMR-Spektrum: (CDCl$_3$) δ (ppm):
6.988 (olef. H, pseudo-q), 4.995 (CH, α zu O und CH$_3$; pseudo-qq), 3.97–3.77 (5 CH, α zu O), 3.600 (CH, α zu O, m), 3.400 (CH, α zu O, pseudo-q), 2.263 (allyl. CH$_2$, pseudo-tt), 2.05–1.18 (23 CH$_2$, komplex), 1.405 (CH$_3$, α zu O und CH, d, J = 6,5 Hz), 0.878 (CH$_3$, α zu CH$_2$, t, J = 6,6 Hz)
3-Hydroxyl-H um ca. 3, breit.

2. Organisch-chemische Verbindung gemäss Anspruch 1, erhältlich aus Annona squamosa.

3. Verfahren zur Herstellung des organisch-chemischen Stoffes, gemäss Anspruch 1, dadurch gekennzeichnet, dass man aus zerkleinerten Pflanzenteilen, vorzugsweise der Samen, von Annona squamosa

(1) die in Petrolether löslichen Inhaltsstoffe extrahiert und den Petrolether-Extrakt verwirft und anschliessend

(2) das von den in Petrolether löslichen Stoffen weitgehend befreite Pflanzenmaterial mit in Wasser mischbaren Alkoholen, gegebenenfalls in Gegenwart von Wasser, extrahiert, den Rückstand verwirft, den Extrakt einengt und den auf diese Weise erhaltenen konzentrierten Extrakt mit einem aliphatischen Halogenkohlenwasserstoff, einem aliphatischen Ether und/oder einem Ester extrahiert und den Rückstand verwirft, und

(3) das gemäss (2) erhaltene rohe Annonin durch Verdampfen des Lösungsmittels isoliert und gegebenenfalls

(4) nach üblichen Methoden reinigt.

4. Organisch-chemische Verbindungen gemäss Anspruch 1, erhältlich durch das Verfahren gemäss Anspruch 3.

5. Schädlingsbekämpfungsmittel, gekennzeichnet durch einen Gehalt an der organisch-chemischen Verbindung gemäss den Ansprüchen 1, 2 oder 4.

6. Verwendung der organisch-chemischen Verbindung gemäss den Ansprüchen 1, 2 oder 4, zur Bekämpfung von Schädlingen, insbesondere Insekten.

7. Verfahren zur nichttherapeutischen Bekämpfung von Schädlingen, dadurch gekennzeichnet, dass die organisch-chemische Verbindung gemäss den Ansprüchen 1, 2 oder 4 auf die Schädlinge, vorzugsweise Insekten oder ihren Lebensraum einwirken.

8. Verfahren zur Herstellung von Schädlingsbekämpfungsmitteln, dadurch gekennzeichnet, dass man die organisch-chemische Verbindung gemäss den Ansprüchen 1, 2 oder 4 mit Streckmitteln und/oder oberflächenaktiven Mitteln vermischt.

**Revendications**

1. Composé chimique organique possédant les propriétés suivantes:

1. Aspect:
   Substance solide cireuse, amorphe, incolore

2. Solubilité:
   La substance cireuse est insoluble ou très peu soluble dans l'éther de pétrole et l'eau, bien soluble dans l'éther, $CHCl_3$, $CH_2Cl_2$, le méthanol, l'acétate d'éthyle. Elle a une réaction positive à la vanilline et à l'acide sulfurique ainsi qu'au réactif de Dragendorff bien qu'elle ne contienne pas d'azote.

3. Poids moléculaire (PM): 622

4. Analyse élémentaire:
   Trouvé: C=70,5 %; H=10,7 %; O=18,1 %
   Calculé: C=71,34%; H=10,68%; O=17,98%
   Formule brute (PM = 622): $C_{37}H_{66}O_7$.

5. Spectre UV:
   Acétonitril $\lambda_{max}$ = 209 nm ($\varepsilon_{max}$ 9500)

6. Spectre IR (KBr) $\lambda_{max}$:
   3420; 3380; 2920; 2850; 1745; 1655; 1465; 1320; 1120; 1070; 1020; 960; 930; 910; 860; 840; 740; 630 cm$^{-1}$ (et Fig. 1)

7. Spectre de masse EI: m/e (intensité)
   604 (< 1) = $C_{37}H_{64}O_6$; 586 (< 1); 568 (< 1); 519 (1,3); 501 (2,8); 483 (2,7); 465 (1,5); 417 (6,9); 399 (16,7) = $C_{26}H_{39}O_3$; 347 (62,7) = $C_{22}H_{35}O_3$; 329 (14,7); 319 (15); 295 (100) = $C_{18}H_{31}O_3$ (pic de base); 267 (19); 239 (19,3) = $C_{15}H_{27}O_2$; 203 (8); 195 (14); 169 (18); 135 (22); 121 (32,7); 109 (39,3); 97 (49,3); 95 (66); 83 (34,3); 81 (60); 71 (44); 69 (38,7); 67 (46); 57 (27,3); 55 (56); 43 (35,3); 41 (35).

8. Spectre de RMN-$^{13}$C: (CDCl$_3$) δ (ppm):
   173.897 (O–CO–; insaturation α, β), 148.879 (CH oléf.), 134.329 (C oléf.), 83.379 (CH, α de O), 82.869 (CH, α de O), 82.546 (CH, α de O), 82.197 (CH, α de O), 77.338 (CH, α de O et CH$_3$), 74.127 (CH, α de O), 71.657 (CH, α de O), 71.320 (CH, α de O), 37.413 (CH$_2$), 37.207 (CH$_2$), 33.108 (CH$_2$), 32.397 (CH$_2$), 31.789 (CH$_2$), 29.696 (CH$_2$), 29.541 (3×CH$_2$), 29.518 (CH$_2$), 29.438 (CH$_2$), 29.321 (CH$_2$), 29.233 (CH$_2$), 29.106 (CH$_2$), 28.910 (CH$_2$), 28.891 (CH$_2$), 28.400 (CH$_2$), 27.328 (CH$_2$), 25.597 (CH$_2$, allyl.), 25.573 (CH$_2$), 25.097 (CH$_2$), 24.723 (CH$_2$), 22.552 (CH$_2$, α de CH$_3$), 21.981 (CH$_2$), 19.145 (CH$_3$, α de CH), 14.007 (CH$_3$, α de CH$_2$).

9. Spectre de RMN-$^1$H: (CDCl$_3$) δ (ppm):
   6.988 (H oléf., pseudo-q), 4.995 (CH, α de O et de CH$_3$; pseudo-qq), 3,97–3,77 (5 CH, α de O), 3.600 (CH, α de O, m), 3.400 (CH, α de O, pseudo-q), 2.263 (allyl. CH$_2$, pseudo-tt), 2,05–1,18 (23 CH$_2$, complexe), 1.405 (CH$_3$, α de O et CH, d, J = 6,5 Hz), 0,878 (CH$_3$, α de CH$_2$, t, J = 6,6 Hz)
   3 H de groupe hydroxy pour environ 3, large.

2. Composé chimique organique selon la revendication 1, obtenu à partir d'Annona squamosa.

3. Procédé de préparation de la substance chimique organique selon la revendication 1, caractérisé en ce que, partant de parties végétales broyées, de préférence les graines, d'Annona squamosa
   (1) on extrait les constituants solubles dans l'éther de pétrole et on rejette l'extrait dans l'éther de pétrole, puis
   (2) on extrait la matière végétale entièrement débarrassée des constituants solubles dans l'éther de pétrole par des alcools miscibles à l'eau, éventuellement en présence d'eau, on rejette le résidu, on concentre l'éstrait, et on ré-extrait l'éxtrait concentré ainsi obtenu par un hydrocarbure halogéné aliphatique, un éther aliphatique et/ou un ester et on rejette le résidu, et
   (3) on isole l'annonine brute obtenue en (2) ci-dessus par évaporation du solvant et le cas échéant
   (4) on la purifie par des techniques usuelles.

4. Composés chimiques organiques selon la revendication 1, obtenus par le procédé de la revendication 3.

5. Produit pesticide caractérisé en ce qu'il contient le composé chimique organique selon les revendications 1, 2 ou 4.

6. Utilisation du composé chimique organique selon les revendications 1, 2 ou 4, dans la lutte contre les parasites, en particulier les insectes.

7. Procédé pour la lutte non thérapeutique contre les parasites, caractérisé en ce que l'on fait agir le composé chimique organique selon les revendications 1, 2 ou 4, sur les parasites, de préférence des insectes, ou leur habitat.

8. Procédé de préparation de produits pesticides, caractérisé en ce que l'on mélange le composé chimique organique selon les revendications 1, 2 ou 4, avec des diluants et/ou des agents tensioactifs.

**Claims**

1. Organochemical compound with the following properties:

1. Appearance:
Colourless amorphous waxy solid.

2. Solubility:
The waxy substance is insoluble or very sparingly soluble in petroleum ether and water and readily soluble in ether, $CHCl_3$, $CH_2Cl_2$, methanol and ethyl acetate. It exhibits a positive reaction with vanillin/sulphuric acid and Dragendorff's reagent, although it contains no nitrogen.

3. Molecular weight (MW): 622

4. Elemental analysis:
C=70,5 %; H=10,7 %; O=18,1 % found
C=71,34%; H=10,68%; O=17,98% calculated
Empirical formula (MW = 622): $C_{37}H_{66}O_7$.

5. UV-spectrum:
$\lambda_{max}^{acetonitrile}$ = 209 nm ($\varepsilon_{max}$ 9.500)

6. IR-spectrum (KBr) $\lambda_{max}$:
3420; 3380; 2920; 2850; 1745; 1655; 1465; 1320; 1120; 1070; 1020; 960; 930; 910; 860; 840; 740; 630 cm$^{-1}$ and Figure 1.

7. EI-mass spectrum: m/e (intensity)
604 (< 1) = $C_{37}H_{64}O_6$; 586 (< 1); 568 (< 1); 519 (1,3); 501 (2,8); 483 (2,7); 465 (1,5); 417 (6,9); 399 (16,7) = $C_{26}H_{39}O_3$; 347 (62,7) = $C_{22}H_{35}O_3$; 329 (14,7); 319 (15); 295 (100) = $C_{18}H_{31}O_3$ (base peak); 267 (19); 239 (19,3) = $C_{15}H_{27}O_2$; 203 (8); 195 (14); 169 (18); 135 (22); 121 (32,7); 109 (39,3); 97 (49,3); 95 (66); 83 (34,3); 81 (60); 71 (44); 69 (38,7); 67 (46); 57 (27,3); 55 (56); 43 (35,3); 41 (35).

8. $^{13}$C-NMR-spectrum: (CDCl$_3$) δ (ppm):
173.897 (O–CO–; α, β-unsaturated), 148.879 (olefinic CH), 134.329 (olefinic C), 83.379 (CH, α to O), 82.869 (CH, α to O), 82.546 (CH, α to O), 82.197 (CH, α to O), 77.338 (CH, α to O and CH$_3$), 74.127 (CH, α to O), 71.657 (CH, α to O), 71.320 (CH, α to O), 37.413 (CH$_2$), 37.207 (CH$_2$), 33.108 (CH$_2$), 32.397 (CH$_2$), 31.789 (CH$_2$), 29.696 (CH$_2$), 29.541 (3×CH$_2$), 29.518 (CH$_2$), 29.438 (CH$_2$), 29.321 (CH$_2$), 29.233 (CH$_2$), 29.106 (CH$_2$), 28.910 (CH$_2$), 28.891 (CH$_2$), 28.400 (CH$_2$), 27.328 (CH$_2$), 25.597 (CH$_2$, allyl), 25.573 (CH$_2$), 25.097 (CH$_2$), 24.723 (CH$_2$), 22.552 (CH$_2$, α to CH$_3$), 21.981 (CH$_2$), 19.145 (CH$_3$, α to CH), 14.007 (CH$_3$, α to CH$_2$).

9. $^1$H-NMR spectrum: (CDCl$_3$) δ (ppm):
6.988 (olefinic H, pseudo q), 4.995 (CH, α to O and CH$_3$; pseudo qq), 3.97–3.77 (5 CH, α to O), 3.600 (CH, α to O, m), 3.400 (CH, α to O, pseudo q), 2.263 (allyl CH$_2$, pseudo tt), 2.05–1.18 (23 CH$_2$, complex), 1.405 (CH$_3$, α to O and CH, d, J = 6.5 Hz), 0,878 (CH$_3$, α to CH$_2$, t, J = 6.6 Hz)
3 hydroxyl-H at about 3, broad.

2. Organochemical compound according to Claim 1, obtainable from Annona squamosa.

3. Process for the preparation of the organochemical substance according to Claim 1, characterized in that, from comminuted plant parts, preferably the seeds, of Amona squamosa,

(1) the contents which are soluble in petroleum ether are extracted and the petroleum ether extract is discarded, and subsequently

(2) the plant material which has been largely freed from the substances which are soluble in petroleum ether is extracted with water-miscible alcohols, if appropriate in the presence of water, the residue is discarded, the extract is concentrated and the concentrated extract obtained in this manner is extracted with an aliphatic halogenohydrocarbon, an aliphatic ether and/or an ester and the residue is discarded, and

(3) the crude annonin obtained according to (2) is isolated by evaporating off the solvent and, if appropriate,

(4) is purified by customary methods.

4. Organochemical compound according to Claim 1, obtainable by the process according to Claim 3.

5. Agents for combating pests, characterized in that they contain the organochemical compound according to Claims 1, 2 or 4.

6. Use of the organochemical compound according to Claims 1, 2 or 4 for combating pests, in particular insects.

7. Method of combating pests non-therapeutically, characterized in that the organochemical compound according to Claims 1, 2 or 4 is allowed to act on the pests, preferably insects, or their environment.

8. Process for the preparation of agents for combating pests, characterized in that the organochemical compound according to Claims 1, 2 or 4 is mixed with extenders and/or surface-active agents.

EP 0 180 806 B1